Europäisches Patentamt

European Patent Office

Office européen des brevets

(19)

(11) Veröffentlichungsnummer : **0 123 234**
**B1**

(12) **EUROPÄISCHE PATENTSCHRIFT**

(45) Veröffentlichungstag der Patentschrift :
27.07.88

(51) Int. Cl.⁴ : **E 04 B   1/84, C 04 B 26/06**

(21) Anmeldenummer : 84104206.2

(22) Anmeldetag : 13.04.84

(54) Schalldämmplatten auf Basis von mineralischen Fasern und thermoplastischen Bindemitteln.

(30) Priorität : 20.04.83 DE 3314373

(43) Veröffentlichungstag der Anmeldung :
31.10.84 Patentblatt 84/44

(45) Bekanntmachung des Hinweises auf die Patenterteilung : 27.07.88 Patentblatt 88/30

(84) Benannte Vertragsstaaten :
BE CH DE FR GB IT LI NL SE

(56) Entgegenhaltungen :
EP-A- 0 009 940
EP-A- 0 100 846
BE-A-   506 883
DE-A- 2 331 137
DE-A- 2 545 728
FR-A- 1 070 908
FR-A- 2 359 232
NL-A-   258 932

(73) Patentinhaber : BASF Aktiengesellschaft
Carl-Bosch-Strasse 38
D-6700 Ludwigshafen (DE)

(72) Erfinder : Dotzauer, Bernhard, Dr.
Woehlerstrasse 12 f
D-6701 Maxdorf (DE)
Erfinder : Kast, Hans, Dr.
Kantstrasse 1
D-6800 Mannheim 1 (DE)
Erfinder : Franzmann, Gernot, Dr.
Im Woogtal 13
D-6719 Bobenheim (DE)
Erfinder : Ley, Gregor, Dr.
In den Trankstuecken
D-6719 Wattenheim (DE)
Erfinder : Beckerle, Wilhelm Friedrich
Beethovenstrasse 20 1/2
D-6712 Bobenheim-Roxheim (DE)
Erfinder : Schilder, Wolfgang
Berliner Strasse 20
D-6716 Dirmstein (DE)

**0 123 234**

**Beschreibung**

In der Praxis werden im großen Ausmaß Schalldämmplatten auf Basis von Mineralfasern, Bindemitteln und zusätzlich meist Füllstoffen, Brandschutzmitteln und Hydrophobierungsmitteln hergestellt. Als Bindemittel dient dabei vorwiegend Stärke, die in Mengen von bis zu etwa 15 %, bezogen auf die Mineralfasern, eingesetzt wird. Als Füllstoffe werden meist feinteilige Tone, z. B Kaolin eingesetzt und als Mineralfasern dienen Steinwolle und/oder Glasfasern, die meist Längen von 5 bis 50 mm und eine Dicke von etwa 1,7 bis 3,3 dtex haben. Der Anteil an Füllstoffen kann dabei in weiten Grenzen variiert werden und liegt häufig im Bereich von 10 bis 30 Gew.%, bezogen auf die Mineralfasern. Die Schalldämmplatten weisen meist eine Dicke von etwa 1 bis 3 cm auf. Ein Nachteil dieser bekannten Schalldämmplatten ist ihre Feuchtigkeitsempfindlichkeit, die meist dazu zwingt, die Rückseiten der Platten, z. B. mit Duroplasten, wie wäßrigen Melamin/Formaldehyd-Harzen, zu beschichten bzw. zu imprägnieren, wodurch eine weitere Trocknung erforderlich wird. Die Herstellung derartiger Platten ist schon aus diesem Grund verhältnismäßig energieaufwendig. Des weiteren führt die Stärke durch Migration zu einer Verfärbung von Dekorbeschichtungen, die üblicherweise auf der Vorderseite der Platten aufgebracht werden.

Gemäß der DDR-Patentschrift 83 315 hat man auch schon Schalldämmplatten hergestellt, indem man mineralische Fasern mit Zement oder Gips sowie einer Polyvinylacetat-Dispersion unter Zusatz einer Bitumenemulsion gebunden hat Ein Zusatz von Bitumenemulsion ist dabei im Hinblick auf ein Verhindern von Ausblühungen erforderlich, führt aber zu Verfärbungen und die erhaltenen Produkte zeigen vergleichsweise hohe Raumgewichte, niedrige Festigkeiten und geringe Formstabilität in der Wärme.

Nach dem Verfahren der US-A 3 779 862 werden flexible Mineralfaser-Platten hergestellt, indem man bei der Herstellung der wäßrigen Aufschlämmung der Mineralfasern eine wäßrige Dispersion eines anionischen, selbstvernetzenden Polyacrylats sowie eine Aluminiumhydroxid-Suspension und einen synthetischen anionischen Polyelektrolyten zusetzt, wonach die Platten unter Entwässerung gebildet werden. Bei diesem etwas umständlichen Verfahren erhält man jedoch Platten, die nicht selbsttragend und nicht feuchtigkeitsfest sind.

Schließlich ist es aus der DE-A 25 45 728 bekannt, Dämmplatten herzustellen, indem man Perlit und Steinwolle mit einer Polymerdispersion auf Basis eines Copolymerisates aus Butylacrylat, Acrylnitril und Acrylsäure unter Zusatz eines Faseraufschlußmittels auf Basis einer wäßrigen Lösung eines carboxylgruppenhaltigen Polyacrylesters bindet. Dabei erhält man jedoch Dämmplatten, die zwar eine sehr gute Wärmedämmung ergeben, deren Druckfestigkeit und Biegezugfestigkeit jedoch zu wünschen übrig lassen. Aufgrund der in Beispiel 1 der DE-A 25 45 728 angegebenen Biegefestigkeit der Dämmplatte kann abgeschätzt werden, daß als Bindemittel ein Copolymerisat eingesetzt wurde, dessen Glastemperatur unter — 20 °C liegt.

Es wurde nun gefunden, daß Schalldämmplatten auf Basis von mineralischen Fasern und thermoplastischen Bindemitteln, die ggf. zusätzlich Füllstoffe, Brandschutzmittel und Hydrophobierungmittel enthalten, besonders vorteilhafte Eigenschaften haben, wenn sie als Bindemittel 4 bis 20 %, bezogen auf das Gewicht der mineralischen Fasern, an Polymerisaten eines Glastemperaturbereichs von 30 bis 80 °C aus 60 bis 100 Gew.-%, bezogen auf das Copolymerisat, 1 bis 4 C-Atome aufweisenden (Meth)acrylaten und 0 bis 40 Gew.% Acrylnitril und/oder Styrol enthalten. Derartige Schalldämmplatten können in an sich üblicher Weise durch Behandeln von Mineralfasern mit einer anionischen Dispersion eines Polymerisates eines Glastemperaturbereiches von 30 bis 80 °C aus 2 bis 4 C-Atome aufweisenden (Meth)-acrylaten und 0 bis 40 Gew.% Acrylnitril und/oder Styrol und einem Fällungsmittel in wäßriger Suspension, Abtrennen der wäßrigen Phase unter Blattbildung und Trocknen hergestellt werden. Bei einer anderen Ausführungsform des Herstellungsverfahrens können auch die Mineralfasern nach der Blattbildung mit einer wäßrigen anionischen Dispersion von Polymerisaten eines Glastemperaturbereichs von 30 bis 80 °C aus 60 bis 100 %, bezogen auf das Polymerisat, 1 bis 4 C-Atome aufweisenden (Meth)acrylaten und 0 bis 40 Gew.% Acrylnitril und/oder Styrol behandelt und dann getrocknet werden.

Die Schalldämmplatten enthalten die hierfür üblichen Mineralfasern, z. B. Steinwolle, Basaltwolle und/oder Glasfasern mit Faserlängen von meist 0,2 bis 8, insbesondere von 0,5 bis 5 cm und Dicken von etwa 1,7 bis 3,3 dtex Derartige Mineralfasern werden bei der Herstellung der Schalldämmplatten meist in geschlichtetem Zustand eingesetzt, und als Schlichtemittel für derartige Mineralfasernwerden üblicherweise Mineralöle, synthetische Polymere, wie besonders Polyacrylat-Dispersionen sowie Polyacrylsäuren verwendet.

Die thermoplastischen Bindemittel, d. h. die Polymerisate eines Glastemperaturbereichs von 30 bis 80, vorzugsweise von 50 bis 70 °C, aus 60 bis 100, insbesondere 60 bis 80 Gew.%, bezogen auf das Polymerisat, 1 bis 4 C-Atome aufweisenden Methacrylaten und/oder Acrylaten und 0 bis 40, insbesondere 20 bis 40, vorzugsweise 30 bis 40 Gew.% Acrylnitril und/oder Styrol, insbesondere an Acrylnitril, sind in den Schalldämmplatten in einer Menge von 4 bis 20, vorzugsweise von 6 bis 15, insbesondere von 8 bis 12 Gew.%, bezogen auf das Gewicht der Mineralfasern, enthalten. Sie leiten sich z. B. von Methylmethacrylat, Ethylacrylat und -methacrylat, n-Butyl-methacrylat, tert.-Butylacrylat und -methacrylat sowie ferner ggf. in untergeordneten Mengen von n-Butylacrylat und Methylacrylat ab. Die Polymeren Bindemittel können (Meth)Acrylsäure und/oder (Meth)Acrylamid in Mengen von bis zu 5 % einpolymerisiert enthalten. Im allgemeinen werden sie bei der Herstellung der Schalldämmplatten in Form ihrer wäßrigen

2

anionischen Dispersionen eingesetzt, die in üblicher Weise unter Verwendung der üblichen Mengen der üblichen anionischen sowie ggf. zusätzlich von üblichen nichtionischen Emulgatoren unter Verwendung der üblichen Mengen der üblichen radikalbildenden Polymerisationsinitiatoren durch Emulsionspolymerisation hergestellt sind. Als anionische Emulgatoren seien hier z. B. Alkylsulfonate, sulfatierte und ethoxylierte Alkylphenole erwähnt. Polymerisat-Dispersionen dieser Art sind im Handel erhältlich. Sie liegen meist in Form von 40 bis 70 %igen Dispersionen vor.

Bei der Herstellung der Schalldämmplatten unter Aufschlämmung der Mineralfasern und Zugabe von Bindemitteln zu der wäßrigen Mineralfaser-Suspension können die Poly-(meth)acrylat-Dispersionen der genannten Art als solche zu der Suspension zugesetzt werden. Durch Fällungsmittel wird dann das Bindemittel-Polymerisat auf den Fasern niedergeschlagen und bindet diese anschließend an die übliche Blattbildung, z. B. auf Sieben unter Abtrennung der wäßrigen Phase. Das Trocknen wird dann anschließend an die Blattbildung bei erhöhter Temperatur, die meist zwischen 110 und 220, vorzugsweise zwischen 140 und 180 °C liegt, vorgenommen, wobei z. B. Infrarotstrahler oder Heißluft bzw. Mikrowellen zur Trocknung eingesetzt werden können Es hat sich als vorteilhaft erwiesen, vor der Blattbildung übliche Wärmesensibilisierungsmittel zuzusetzen, durch die eine Migration der Polymerteilchen während des Trocknungsvorgangs verhindert werden kann. Als Wärmesensibilisierungsmittel kommen z. B. wasserlösliche Polyacetale gemäß der GB-A 866 401, oxalkylierte Polysiloxane gemäß den brit. Patentschriften 1 206 036, 1 178 304 und 1 284 064, kationenaktive Stoffe gemäß der GB-A 1 230 640 und der CA-A 909 981 sowie mit besonderem Vorteil alkoxylierte Amine mit inverser Löslichkeit gemäß der GB-A 1 422 873 in Betracht. Die alkoxylierten Amine können sich von einwertigen oder mehrwertigen Aminen ableiten, die im allgemeinen 1 bis 10, vorzugsweise 1 bis 3 Aminogruppen aufweisen. Von besonderem Interesse sind Amine mit 2 Aminogruppen und die Aminogruppen der oxalkylierten Amine können primär, sekundär oder tertiär sein. Die oxalkylierten Amine leiten sich vorzugsweise von aliphatischen Aminen, insbesondere von mehrwertigen aliphatischen Aminen, wie Ethylendiamin, Diethylentriamin, Dipropylentriamin, Triethylentetramin und Tetraethylenpentamin, ferner von Ethanolamin, Diethanolamin und Triethanolamin ab, wobei Ethylendiamin von besonderem Interesse ist. Sie leiten sich zudem insbesondere von Ethylenoxid und/oder Propylenoxid ab. Sie werden im allgemeinen in Mengen von 1 bis 5 Gew.%, bezogen auf das polymere Bindemittel eingesetzt und können der Polyacrylatdispersion zugesetzt werden.

Bei der Herstellung der Schalldämmplatten aus wäßriger Suspension können als Fällungsmittel mit Vorteil kationische Polymer-Dispersionen eingesetzt werden. Derartige Polymer-Dispersionen enthalten übliche kationische und ggf. zusätzlich übliche nichtionische Emulgatoren, wie z. B. alkoxylierte Alkylphenole oder alkoxylierte Fettalkohole oder alkoxylierte Säuren in üblichen Mengen von etwa 0,1 bis 2,0 Gew.%, bezogen auf das Polymerisat. Auch derartige kationische Polymer-Dispersionen sind im Handel erhältlich. Schließlich können als Fällungsmittel auch Salze mehrwertiger Metalle, z. B. Aluminiumsalze, wie besonders Aluminiumsulfat, eingesetzt werden, wobei deren Menge meist 5 bis 15, vorzugsweise 8 bis 12 Gew.%, bezogen auf das in der anionischen Poly(meth)acrylat-Dispersion enthaltene Poly(meth)acrylat, beträgt.

Die übliche Verwendung von handelsüblichen Flockungshilfsmitteln, wie Polyacrylamid, zur Flockung feinteiliger Anteile der anorganischen Zuschlagstoffe ist oft vorteilhaft, weil man dadurch zu klaren Filtraten gelangt.

Verfestigt man die Mineralfasern erst nach der Blattbildung mit der wäßrigen anionischen Poly(meth)acrylatdispersion, z. B. durch Einsaugen eines Schaums derselben oder Besprühen, so wird die Polyacrylatdispersion dabei vorzugsweise in einer Konzentration von 10 bis 50, insbesondere von 15 bis 30 Gew % eingesetzt und enthält vorzugsweise ein Wärmesensibilisierungsmittel der zuvor genannten Art in der zuvor angegebenen Menge. Bei dieser Verfahrensvariante können die Mineralfaser-Platten auf trockenem oder naßem Weg in an sich üblicher Weise hergestellt sein Anschließend an das Umprägnieren der Mineralfaser-Platten werden diese, wie zuvor angegeben, getrocknet.

Die fertig getrockneten Schalldämmplatten haben im allgemeinen eine Dicke von 0,5 bis 5, meist von 1 bis 3, vorzugsweise von 1 bis 2 cm. Sie enthalten meist Füllstoffe, wie feinteilige Tone, z. B. Kaolin und Montmorillonit, Feldspat, Kreide, Kieselgur und/oder Glimmer, deren Menge bis 30 %, bezogen auf die Mineralfasern, vorzugsweise 10 bis 20 Gew.% beträgt.

Zusätzlich können die Schalldämmplatten, die im allgemeinen ein sehr günstiges Brandverhalten aufweisen, noch bis zu 10, vorzugsweise 1 bis 3 Gew.%, bezogen auf die Mineralfasern üblicher Brandschutzmittel, z. B. Aluminiumsilikate und -hydroxide, Borate, wie Borax und/oder Phosphate wie prim. Natriumphosphat enthalten. Schließlich fügt man bei der Herstellung der Schalldämmplatten meist noch bis zu 5, vorzugsweise 1 bis 2 Gew.%, bezogen auf die Mineralfasern an üblichen Hydrophobierungsmitteln, wie Silikone (Polysiloxane) und Wachse zu.

Die neuen Schalldämmplatten können auf ihrer Sichtfläche mit den bekannten Schall-absorbierenden Strukturen versehen und in an sich üblicher Weise beschichtet sein. Hierfür geeignete Massen sind im Handel erhältlich Derartige Beschichtungen auf Basis handelsüblicher, wäßriger Polymerdispersionen können auch gefärbt sein.

Die neuen Schalldämmplatten zeichnen sich durch ein hervorragendes Schalldämmverhalten aus, sind steif und biegen auch in feuchtwarmer Atmosphäre (Tropen) oder in nassem Zustand nicht durch. Sie sind schwer entflammbar und geben einmal aufgenommenes Wasser ohne Verlust ihrer funktionellen Eigenschaften wieder ab. Überraschenderweise können die neuen Schalldämmplatten gamäß den neuen Herstellungsverfahren in besonders energiesparender Weise hergestellt werden, da dabei das Wasser wesentlich leichter aus den verfestigten Platten durch Verdampfen beim Trocknen abgeführt werden kann als wenn als Bindemittel Stärke eingesetzt wird. Von Vorteil bei den neuen Herstellungsverfahren ist auch, daß das Abwasser praktisch nicht durch Schadstoffe belastet wird.

Die in den folgenden Beispielen angegebenen Teile und Prozente beziehen sich, wenn nicht anders angegeben, auf das Gewicht.

## Beispiele 1 bis 3

Man gibt jeweils zu einer Suspension von 330 Teilen Steinwolle (durchschnittliche Faserlänge ca. 3 cm, Dicke unter 3,3 dtex) in 5 000 Teilen Wasser, die in der folgenden Tabelle angegebenen Zuschlagstoffe, danach jeweils eine 50 %ige anionische Dispersion des Bindemittel-Polymerisats, das in der folgenden Tabelle angegeben ist und danach die darin angegebene Menge an Fällungsmittel, wobei die Angaben in Prozent jeweils auf die Menge der Steinwolle bezogen sind. Nach gründlichem Verteilen der Bestandteile gibt man die Masse bei Unterdruck auf ein Sieb und unterstützt das Entwässern noch durch leichtes Pressen (etwa 0,1 bar). Der Auftrag erfolgt in einer Dicke (nach dem Pressen) von 15 mm. Man trocknet anschließend 2 bis 3 Stunden und erhält Schalldämmplatten einer spezifischen Dichte von 0,2 bis 0,7 g/cm³. Ihre Biegezugfestigkeiten, gemessen nach DIN 53 423 (Breite abweichend 4 cm), sind in der folgenden Tabelle zusammengestellt. In dieser Tabelle ist i-BA = iso-Butylacrylat, nBA = n-Butylacrylat, tert. BA = tert. Butylacrylat, AN = Acrylnitril, As = Acrylsäure, MMA = Methylmethacrylat, EA = Ethylacrylat, MA = Methylacrylat, S = Styrol.

(Siehe Tabelle Seite 5ff.)

Tabelle

| Bsp. Nr. | Bindemittelpolymerisat Polyacrylat | Glastemp. (°C) | Menge | Zuschlagstoffe (bezogen auf Mineralfasern!) | Fällungsmittel | Biegeversuch (Kraft bei Bruch) DIN 53 423 (N; 4 cm Breite, 1,5 cm Dicke) | Wassergehalt vor dem Trocknen (%) | Trocknungszeit 190°C; Zeit bis zur Gewichtskonstanz (min) |
|---|---|---|---|---|---|---|---|---|
| 1 | 30 nBA<br>35 MMA<br>35 AN | 62 | 8,5 % | 15 % Ton<br>2 % Distearyldiketen | 0,4 % $Al_2(SO_4)_3$ | 63 | 34,6 | 36 |
| 2 | 60 i-BA<br>5 MMA<br>32 AN<br>3 AS | 42 | 6,0 % | 10 % Kaolin<br>1,5 % Distearyldiketen | 0,4 % $Al_2(SO_4)_3$ | 48 | 37,1 | 37 |
| 3 | 35 nBA<br>12 EA<br>18 MMA<br>35 AN | 38 | 8,0 % | 15 % Kaolin | 0,1 % $Al_2(SO_4)_3$<br><br>4,0 % kation.Polymer<br>30 nBA<br>10 MMA<br>40 AN<br>20 N-Vinyl-imidazol-methosulfat<br>Glastemp. 45°C | 85 | 46,0 | 49 |

0 123 234

Tabelle (Fortsetzung)

| Bsp. Nr. | Bindemittelpolymerisat Polyacrylat | Glastemp. (°C) | Menge | Zuschlagstoffe (bezogen auf Mineralfasern!) | Füllungsmittel | Biegeversuch (Kraft bei Bruch) DIN 53 423) (N; 4 cm Breite, 1,5 cm Dicke) | Wassergehalt vor dem Trocknen (%) | Trocknungszeit 190°C; Zeit bis zur Gewichtskonstanz (min) |
|---|---|---|---|---|---|---|---|---|
| | 25 nBA | | | | | | | |
| | 15 EA | 54 | 5,0 % | 12,5 % Ton | | 43 | 45,3 | 53 |
| | 20 MMA | | | | | | | |
| | 20 S | | | | | | | |
| | 20 AN | | | | 5,0 % kation.Polymer | | | |
| | | | | | 25 nBA | | | |
| | | | | | 20 MMA | | | |
| | | | | | 40 S | | | |
| | | | | | 5 N-Vinyl-imidazol-methosulfat | | | |
| | | | | | Glastemp. 39°C | | | |
| | 38 i-BA | | | 5 % Ton | | | | |
| 5 | 22 MMA | 55 | 20,0 % | 15 % Kaolin | 1,5 % | 68 | 48,7 | 58 |
| | 25 S | | | | | | | |
| | 15 AN | | | | | | | |
| | 25 i-BA | | | | | | | |
| 6 | 35 MMA | 67 | 15,0 % | — | — | 79 | 52,9 | 59 |
| | 40 AN | | | | | | | |

0 123 234

Tabelle (Fortsetzung)

| Bsp. Nr. | Bindemittelpolymerisat Polyacrylat | Glastemp. (°C) | Menge | Zuschlagstoffe (bezogen auf Mineralfasern!) | Fällungsmittel | Biegeversuch (Kraft bei Bruch) DIN 53 423) (N; 4 cm Breite, 1,5 cm Dicke) | Wassergehalt vor dem Trocknen (%) | Trocknungs- zeit 190°C; Zeit bis zur Gewichts- konstanz (min) |
|---|---|---|---|---|---|---|---|---|
| 7 | 25 nBA 15 MA 20 MMA 40 AN | 59 | 11,0 % | 20 % Kaolin | 1,1 % | 57 | 40,5 | 39 |
| 8 | 20 nBA 30 i-BA 10 MMA 40 AN (erhalten durch Mischen von gleichen Teilen der Polymer- dispersionen mit Polymerisaten aus 40 nBA/60 AN 60 i-BA/20 MMA/20 AN | 48 | 12,0 % | 10 % Kaolin | 1,3 % | 84 | 48,0 | 62 |
| Ver- gleichs- versuch | Kartoffelstärke | | 8,3 % (bestimmt durch Glühverlust; korrigiert) | 18 % Kaolin | — | 63 | 58,3 | 105 |

**Patentansprüche**

1. Schalldämmplatten auf Basis von mineralischen Fasern und thermoplastischen Bindemitteln, die ggf. zusätzlich Fülllstoffe, Brandschutzmittel und Hydrophobierungsmittel enthalten, dadurch gekennzeichnet, daß sie als Bindemittel 4 bis 20 %, bezogen auf das Gewicht der mineralischen Fasern, an Polymerisaten eines Glastemperaturbereiches von 30 bis 80 °C aus 60 bis 100 Gew.%, bezogen auf das Copolymerisat, 1 bis 4 C-Atome aufweisenden (Meth)acrylaten und 0 bis 40 Gew.% Acrylnitril und/oder Styrol enthalten.

2. Verfahren zur Herstellung von Schalldämmplatten durch Behandeln von Mineralfasern mit einer anionischen Polyacrylatdispersion und einem Fällungsmittel in wäßriger Suspension, Abtrennen der wäßrigen Phase unter Blattbildung und Trocknen, dadurch gekennzeichnet, daß man als anionische Polyacrylatdispersion eine Dispersion eines Polymerisates eines Glastemperaturbereiches von 30 bis 80 °C aus 1 bis 4 C-Atome aufweisenden (Meth)acrylaten und ggf. bis 40 % eines Gewichtes Acrylnitril und/oder Styrol einsetzt.

3. Verfahren nach Anspruch 2, dadurch gekennzeichnet, daß man als Fällungsmittel eine kationische Polymerdispersion einsetzt.

4. Verfahren nach Anspruch 2, dadurch gekennzeichnet, daß man als Fällungsmittel Aluminiumsalze und zusätzlich eine reaktive Gruppe aufweisende Hydrophobierungsmittel einsetzt.

5. Verfahren zur Herstellung von Schalldämmplatten durch Behandeln von Mineralfaservliesen mit einer anionischen Polymerdispersion, dadurch gekennzeichnet, daß man eine wäßrige Suspension der Mineralfasern unter Blattbildung entwässert und das Blatt, das die Mineralfasern enthält, mit einer anionischen Polyacrylatdispersion eines Polymerisates eines Glastemperaturbereiches von 30 bis 80 °C aus 2 bis 4 C-Atome aufweisenden (Meth)acrylaten und ggf. bis 40 % seines Gewichts Acrylnitril oder Styrol behandelt und dann trocknet.

6. Verfahren nach den Ansprüchen 2 und 5, dadurch gekennzeichnet, daß ein Thermosensibilierungsmittel mitverwendet wird.

**Claims**

1. A sound-insulating board based on mineral fibers and a thermoplastic binder, which may or may not additionally contain fillers, flameproofing agents and water repellants, characterized in that it contains, as the binder, from 4 to 20 %, based on the weight of the mineral fibers, of a polymer having a glass transition temperature of from 30 to 80 °C and consisting of from 60 to 100 % by weight of (meth)acrylates of 1 to 4 carbon atoms and from 0 to 40 % by weight of acrylonitrile and/or styrene, the percentages being based on the copolymer.

2. A process for the production of a sound-insulating board by treating mineral fibers with an anionic polyacrylate dispersion and a precipitating agent in aqueous suspension, separating off the aqueous phase with sheet formation, and drying, characterized in that the anionic polyacrylate dispersion used is a dispersion of a polymer having a glass transition temperature of from 30 to 80 °C and consisting of (meth)acrylates of 1 to 4 carbon atoms and, if desired, up to 40 %, based on the weight of the polymer, of acrylonitrile and/or styrene.

3. A process as claimed in claim 2, characterized in that the precipitating agent used is a cationic polymer dispersion.

4. A process as claimed in claim 2, characterized in that an aluminum salt is used as the precipitating agent, and in addition a water repellant possessing a reactive group is employed.

5. A process for the production of a sound-insulating board by treating mineral fiber mats with an anionic polymer dispersion, characterized in that an aqueous suspension of the mineral fibers is dewatered with sheet formation, and the sheet containing the mineral fibers is treated with an anionic polyacrylate dispersion containing a polymer having a glass transition temperature of from 30 to 80 °C and consisting of (meth)acrylates of 2 to 4 carbon atoms and, if desired, up to 40 %, based on the weight of the polymer, of acrylonitrile or styrene, and is then dried.

6. A process as claimed in claims 2 and 5, characterized in that a heat-sensitizing agent is also used.

**Revendications**

1. Panneaux pour l'isolation acoustique à base de fibres minérales et de liants thermoplastiques, contenant le cas échéant en outre des matières de charge, des agents ignifugeants et des agents destinés à les rendre hydrophobes, caractérisés en ce qu'ils contiennent comme liant 4 à 20 % du poids des fibres minérales de polymères composés de 60 à 100 % du poids du (co)polymère de (méth)acrylates en $C_1$ à $C_4$ et de 0 à 40 % en poids d'acrylonitrile et(ou) de styrène et possédant une température de transition vitreuse comprise entre 30 et 80 °C.

2. Procédé de production de panneaux pour l'isolation acoustique par le traitement de fibres minérales avec un polyacrylate en dispersion anionique et un agent de précipitation en suspension aqueuse, la séparation de la phase aqueuse avec formation d'une feuille et un séchage, caractérisé en ce que le polyacrylate en dispersion anionique est un polymère de (méth)acrylates en $C_1$ à $C_4$, pouvant éventuellement contenir jusqu'à 40 % de son poids d'acrylonitrile et(ou) de styrène et possédant une température de transition vitreuse comprise entre 30 et 80 °C.

3. Procédé suivant la revendication 2, caractérisé en ce que l'on emploie comme agent de précipitation une dispersion cationique d'un polymère.

4. Procédé suivant la revendication 2, caractérisé en ce que l'on emploie comme agents de précipitation des sels de l'aluminium et en outre des agents destinés à rendre hydrophobes contenant un groupe réactif.

5. Procédé de production de panneaux pour l'isolation acoustique par le traitement de mats de fibres minérales avec une dispersion anionique d'un polymère, caractérisé en ce que l'on déshydrate une suspension aqueuse de fibres minérales avec formation d'une feuille, puis l'on traite la feuille comprenant les fibres minérales avec une dispersion anionique d'un polyacrylate, ce polymère étant composé de (méth)acrylates en $C_1$ à $C_4$, pouvant contenir jusqu'à 40 % de son poids d'acrylonitrile ou de styrène, et possédant une température de transition vitreuse comprise entre 30 et 80 °C, et on sèche.

6. Procédé suivant les revendications 2 et 5, caractérisé en ce que l'on emploie en outre un agent thermosensibilisant.